# EUROPEAN PATENT SPECIFICATION

(11) **EP 4 108 975 B1**
(45) Date of publication and mention of the grant of the patent: **12.02.2025**
(21) Application number: 22179965.3
(22) Date of filing: 20.06.2022
(51) Int. Cl.: F17C 3/02, F17C 3/08

(54) **CRYOGENIC HYDROGEN STORAGE SYSTEM, ENERGY STORAGE SYSTEM, AND METHOD FOR STORING AND DELIVERING HYDROGEN**
KRYOGENES WASSERSTOFFSPEICHERSYSTEM, ENERGIESPEICHERSYSTEM UND VERFAHREN ZUM SPEICHERN UND ABGEBEN VON WASSERSTOFF
SYSTÈME CRYOGÉNIQUE DE STOCKAGE D'HYDROGÈNE, SYSTÈME DE STOCKAGE D'ÉNERGIE ET PROCÉDÉ DE STOCKAGE ET DE DISTRIBUTION DE L'HYDROGÈNE

(30) Priority: 22.06.2021 NL 2028513
(43) Date of publication of application: 28.12.2022
(73) Proprietor: HEBS B.V., 1771 RW Wieringerwerf (NL)
(72) Inventor: Keezer, Marcel Nicolaas, 1731 RE Winkel (NL)
(74) Representative: Arnold & Siedsma

(56) References cited:
- DE-B4- 102005 035 647
- US-A- 3 304 728
- US-A- 4 988 014
- US-A- 5 226 299
- US-A1- 2018 231 182
- US-B1- 6 453 677

## Description

The invention relates to a cryogenic hydrogen storage system. In general, such a cryogenic storage system comprises a vessel for containing cryogenic hydrogen, at least one inlet and/or outlet for letting hydrogen into the system and for letting hydrogen out of the system.

There exists a need for buffering (electrical) energy, caused for a great part by the generation of sustainable energy, also called renewable, green or clean energy, which is often available only intermittently. As an example, solar power is available mostly in summer and during the day, and less abundant or lacking in the winter or during the night. The demand for energy however, is not necessarily coupled to the supply, and therefore a need exists to store energy during times of abundance, and retrieve it during times of scarcity. With investments in renewable energy growing, it is expected the need for storing energy will grow accordingly.

It is principally possible to store energy in the form of hydrogen by producing hydrogen using energy when it is available, and by producing energy from the hydrogen when energy is scarce. However, hydrogen at standard temperature and pressure offers a relatively low volumetric energy density, meaning that a relatively small amount of stored energy requires a relatively large volume. Therefore, in order to store sufficient amounts of energy in the form of hydrogen, relatively large storage systems are needed. Such systems may be impractical and/or costly, thereby decrementing the cost effectiveness of the energy produced.

One such system is known from US 5,226,299 which discloses heat-insulating means of cryogenic objects, consisting of a bank of cooled radiation shields arranged coaxially with the cryogenic object, i.e. a vessel, provided with heat exchange channels which intercommunicate through connecting pipes. The entire bank of shields is made as an integral whole, the channels being located in the body of the shields. The bank of shields is made of a multilayered strip with a pattern of the development of the entire bank of shields applied to it. Then a system of channels and connecting pipes is created between the strip layers in compliance with the pattern. Then the development is cut out and formed into a bank, arranging the shields coaxially with pipes therebetween. The heat-insulating means is intended primarily for use in vessels for storage of cryogenic fluids.

The invention has as its object to provide a hydrogen storage system that allows storing energy at a higher volumetric density and/or cost effectively.

The object is achieved by a cryogenic hydrogen storage system according to claim 1,which comprises a vessel for containing cryogenic hydrogen and at least one inlet and/or outlet for letting gaseous hydrogen into the system and for letting gaseous hydrogen out of the system, further comprising a heating and cooling system for heating and cooling gaseous hydrogen, wherein the heating and cooling system comprises at least one conduit connecting the at least one inlet and/or outlet to the vessel, and a plurality of thermally insulated thermal buffers, the thermal buffers being thermally connected to the at least one conduit in series for heating and cooling a fluid in the conduit.

Firstly, the cooling system allows cooling the hydrogen to cryogenic temperatures, thereby densifying it. Accordingly, a larger amount of hydrogen can be stored in the same volume. As a result, the volumetric energy density of the hydrogen is increased. Accordingly, a smaller system may suffice, and the cryogenic storage system may be more cost effective.

However, cooling the hydrogen consumes a relatively large amount of energy. As such, storing cooled hydrogen as such is not optimally cost effective.

The cryogenic hydrogen storage system therefore also exhibits a heating functionality, brought about by at least one conduit connecting the at least one inlet and/or outlet to the vessel, and a plurality of thermally insulated thermal buffers, the thermal buffers being thermally connected to the at least one conduit in series for heating and cooling a fluid in the conduit. Using the heating and cooling system, hydrogen may be let into the system at a relatively high temperature, and let out at a similar or the same temperature, while it is stored at a relatively low temperature. During normal use, this is achieved by the thermal buffers, which become increasingly cold towards the vessel. As such, hydrogen passing through the conduit towards the vessel is cooled more and more by the buffers. At the same time, each buffer heats up to a certain extent. Upon letting out hydrogen, it passes through the conduit again, thereby thermally contacting the buffers. As a result, heat from the buffers is transferred to the hydrogen, thereby heating it up. At the same time, the buffers cool down.

As such, the thermal buffers cooperate to keep cold in the cryogenic storage system when hydrogen is let out. The cold is then reused when new hydrogen enters the cryogenic storage system. As a result, there is a much smaller energy consumption to cool the new hydrogen. Accordingly, less energy is spent on cryogenic storage, thereby increasing the efficiency of the cryogenic storage system.

In order to limit energy losses to the environment, the vessel may be insulated using multi-layer insulation (MLI), which limits losses via radiation. Exemplary MLI's may comprise aluminum foil and a spacer, such as glass-paper-aluminum. Of course, other suitable MLI's could be employed, such as an aluminized polyester foil, e.g. mylar.

It is especially advantageous if the hydrogen is condensed into a liquid. In that case, the latent heat can be used to store additional energy, thereby further increasing the volumetric energy density in the storage system. For this purpose, the vessel may be configured for containing liquid hydrogen. Of course, some hydrogen in the vessel may still be gaseous.

In such a case, the heating and cooling system may be referred to as a state conversion system.

It is particularly advantageous if at least some of the thermal buffers comprise an annular structure arranged around the vessel.

By arranging the annular buffers around the vessel, the flow of heat to and/or from the vessel may be further limited. In fact, the annular structures may absorb some of the cold lost by the vessel due to their shape. Additionally or alternatively, annular buffers may allow creating a relatively compact system.

In order to provide a particularly compact embodiment, multiple buffers, which are thus thermally insulated from each other, are arranged next to each other at an equal or similar distance to the vessel. For instance, if the vessel has a longitudinal axis, multiple buffers may be arranged at an equal distance with respect to the longitudinal axis. This may for instance be obtained by arranging the buffers next to each other in the longitudinal direction parallel to the longitudinal axis. It is alternatively possible to arrange buffers at the same distance from the longitudinal axis, e.g. the same radial distance, by arranging them next to each other at different angular positions, in particular when the vessel is round.

In the case the buffers are annular in shape, several annular buffers may be arranged concentrically at different longitudinal positions, thereby creating a 'stacked' structure of buffers. In such a structure, a relatively large number of buffers can be used in a relatively small space, wherein each buffer has a different temperature during operation. Increasing the number of buffers increases the energy efficiency of the system, since the difference in temperature between the buffers is smaller and transport of heat is therefore limited.

Depending on the shape of the vessel, other options are possible. In each case, thermal buffers being arranged next to each other may be defined as them being arranged on the same closed 3-dimensional surface which extends around the vessel at a constant distance therefrom. Thus, when thermal buffers are arranged next to each other, they may together at least partly enclose or encapsulate the vessel, i.e. forming a shell at least partly around the vessel. As mentioned elsewhere in this document, it is possible overlapping buffers are provided at a different distance from the vessel (or its longitudinal axis if applicable), i.e. in a different shell.

It is noted that the buffers, being arranged on the outside of the vessel, perform to some extent a shielding function. Optimal shielding could be achieved by arranging a single shield, or at least multiple shields at the same preferably low temperature, extending around as much of the vessel as possible. The current disclosure thus distinguishes itself from this shielding functionality by providing multiple buffers, which are thermally insulated and therefore have different temperatures during operation, next to each other.

The annular structures may be arranged concentrically with each other and/or with the vessel.

It is possible to overlap some of the annular structures with each other as seen in the radial direction, so that at least some of the annular structures extend at least partly around each other.

This may further increase the insulating effect of the annular design and/or may contribute to the compactness of the system.

It is noted overlapping buffers may also be used with non-annular buffers.

At least some of the thermal buffers may extend at least partially over longitudinal ends of the vessel. As a result, cold losses from the longitudinal ends may be (further) mitigated.

Together with the annular structures, the vessel may thus be at least partly encapsulated in the thermal buffers. It should be noted however, that the same insulating effect can be achieved with another form factor of the buffers, as long as least some of the thermal buffers encapsulate the vessel at least partly.

At least some of the buffers, e.g. the annular structures thereof, may comprise a substantially solid mass of a material suitable for cryogenic temperatures, such as aluminum , titanium, copper, or a combination thereof.

The solid masses may be cooled down/heated up in order to store cold or heat therein. Using a solid mass as a heat buffer may contribute to the reliability of the system, and may contribute to an elegant design thereof. The mass of material may be a metal, since metals generally conduct heat relatively easily. As such, it may be relatively easy to store cold in a large portion of, or in the complete mass of material. Suitable materials are aluminum, titanium, copper, or a combination thereof. In particular aluminum is envisioned as material for the buffer, as it has a relatively high heat capacity and is not as costly as other materials.

Additionally or alternatively, at least some of the buffers may comprise a phase shift material, such as nitrogen or neon.

A phase shift material may allow storing cold as latent heat, since the change from e.g. gas to liquid phase and vice versa produces / requires energy. Particularly suitable materials to use as phase change material are nitrogen or neon, as they have relatively low boiling temperatures. As such, their phase change takes place at a relatively low temperatures. This makes them especially suitable for buffering cold as latent heat at relatively low temperatures.

It is particularly envisioned to use a combination of the above-described buffers, i.e. some solid buffers and some phase-change based buffers. The solid buffers may advantageously be used at higher temperatures, i.e. near the inlet/outlet side of the system, whereas the phase change buffers may be used at lower temperatures, i.e. near the vessel. Such a combination is useful, since the heat capacity of e.g. metals decreases as the temperature becomes relatively low. Therefore, low temperature buffers are advantageously phase-change buffers.

In order to provide for thermal contact between the contents of the at least one conduit, i.e. hydrogen, and the buffers, the at least one conduit may be wound along the thermal buffers. By winding the conduit along the buffers, a suitably large area of contact can be established in order to allow sufficiently fast heat transfer.

The at least one conduit may extend e.g. along the inside of an annular buffer, or along the outside thereof, or both. Other manners of winding are also envisioned, such as helically winding the at least conduit around at least a part of the buffers.

It is noted that the at least one conduit may exhibit one or more loops in between consecutive buffers in order to limit heat transfer from one buffer to the next. The conduit may be made of a material with a suitably low heat conductance, such as stainless steel. Accordingly, the conduit would prevent heat exchange between the buffers directly.

A practical winding of the at least one conduit, would include the conduit helically winding around the vessel at a distance thereof, the at least one conduit travelling along the inside and/or outside of the buffers, and optionally having one or more additional windings in between consecutive buffers. In an embodiment, the cryogenic hydrogen storage system further comprises an inlet, connected to the vessel via a first conduit, and an outlet, separate from the inlet, connected to the vessel via a second conduit, wherein the first and the second conduit are thermally connected to the buffers in the same sequence as seen from the vessel to the inlet and outlet respectively.

Accordingly, hydrogen can be let in and/or out via separate pathways, whilst use can still be made of all the buffers.

Further, said embodiment allows selectively connecting the outlet to an upper zone of the vessel or a bottom zone of the vessel, for selectively letting out liquid or gaseous hydrogen.

Selectively connecting the outlet to the upper and lower end zone is understood to mean that as desired, the outlet can be connected to the upper zone at one moment, and to the lower zone at another moment. As such, a choice can be made whether to let out material from the upper zone or to let out material from the lower zone. In the case where the vessel is partly filled with liquid hydrogen, and also contains gaseous hydrogen, the liquid hydrogen will be at the bottom since it is more dense. As such choosing to let out material from the bottom zone, i.e. by connecting the outlet to the lower zone, liquid hydrogen can be let out. Connecting the outlet to the upper zone, gaseous hydrogen can be let out.

By selectively letting out liquid or gaseous hydrogen the temperature and pressure inside the vessel can be desirably controlled. As an example when letting out gaseous hydrogen, the pressure will reduce thereby causing some liquid hydrogen to boil. As a result, the temperature inside the vessel drops.

The same can of course be done when a combined inlet/outlet is used.

The skilled person is able to provide for different methods of selectively connecting the outlet to the upper or lower zone of the vessel, for instance by making a branched conduit connected to the outlet debouche in the vessel at different heights, and by providing valves in the split conduits to selectively use one of the two or more branches.

It is principally also possible to have the conduit extend at least partly in the vessel, and to move an opening thereof up and down in the vessel for changing the height at which hydrogen is let out. Other options may be available to also achieve the selective connection.

In order to limit heat transfer to/from the thermal buffers, they may be arranged in a vacuum container. In particular, the thermal buffers may be placed in a common vacuum container, thereby leading to an elegant design of the system.

It is possible to arrange other heat-critical parts of the system in the same common vacuum container. In particular, it is envisioned the vessel is arranged in the common vacuum container. The cryogenic hydrogen storage system may comprise a cooling device connected to an interior of the vessel for cooling a contents thereof.

Firstly, the cooling device may be used to compensate for losses in the storage system caused by the hydrogen inadvertently heating up. As such, the cooling device allows keeping the hydrogen sufficiently cool. Secondly, the cooling device may be used to cool the storage system, and in particular its buffers and contents, during a first use thereof.

It is noted that although known cooling devices are relatively inefficient, the total energy spent may still be acceptable since the cooling device need only compensate for losses during normal use, and perform a one-time cooling of the buffers and/or hydrogen. Moreover, it is envisioned the cooling device is used only or mainly when energy is abundant, so that its inefficient operation does not impact energy demand during times in which energy is scarce.

The invention also relates to an energy storage system, the system comprising an electrolyser for producing hydrogen connected to a cryogenic hydrogen storage system as described above for supplying hydrogen thereto.

Using such an energy storage system, electrical energy may be converted to hydrogen and vice versa. Accordingly, energy can be stored as hydrogen. The energy storage system can therefore be used to buffer an intermittent supply of energy. In particular, the energy storage system can be used to store renewable energy, such as hydro, wind or solar power during times of abundance, and to release it during times of scarcity. For this purpose, the electrolyser may be electrically connected to an energy source, preferably a renewable energy source. Further, a cooling device of the cryogenic hydrogen storage system may be connected to the same energy source.

In an embodiment of the energy storage system, the electrolyser is configured to provide hydrogen to the cryogenic hydrogen storage system at a pressure above standard pressure.

At this increased pressure, hydrogen condenses at a higher temperature. During a cooling process, the hydrogen therefore becomes liquid earlier. As such, the efficiency of the cooling device may be increased.

This embodiment is particularly suitable in combination with the ability to selectively let out gaseous or liquid hydrogen respectively, since letting out the gaseous hydrogen will decrease temperature inside the vessel, as the increased pressure is lowered.

Standard pressure may herein be defined as atmospheric pressure, or approximately 1 bar.

In order to convert hydrogen back to electrical energy, the energy storage system may further comprise a hydrogen fuel cell connected to the hydrogen storage system.

It is noted that the energy storage system may accordingly be used without causing carbon emissions.

The invention also relates to a method of storing and delivering hydrogen, the method comprising the steps of:
receiving gaseous hydrogen at a first, relatively high temperature;
cooling the hydrogen using a series of thermally isolated thermal buffers of decreasing temperature, thereby compacting the hydrogen and heating the buffers; and
storing the cooled hydrogen cryogenically, and for delivering the hydrogen:
   heating the cooled hydrogen using the series of temperature buffers in reverse order, thereby heating the cooled hydrogen and cooling the buffers;
   delivering gaseous hydrogen.

By cooling the gaseous hydrogen, it is densified. As such, a larger mass of hydrogen can be stored in the same volume. As such, the hydrogen may be stored relatively compactly or relatively cost efficiently. As it is possible to produce hydrogen using electrical energy and vice versa, the method of storing hydrogen finds application in energy storage, particularly in combination with intermittently available energy sources.

The method may be performed using the cryogenic hydrogen storage system as described herein, and may thus have the corresponding features, alone or in any suitable combination.

During the cooling process at least part of the hydrogen may be liquified. Then, liquid hydrogen may be stored, and at least a part thereof may eventually be gasified in order to discharge it. Storing liquid hydrogen allows increasing the volumetric energy density even further.

The method may include, during the cooling and/or heating step, a step of performing an ortho-para conversion at a hydrogen temperature of between 70 K and 90 K, preferably of approximately 80 K. The ortho-para conversion may take place by contacting the hydrogen with a catalyst. Heat generated or needed during the conversion may be discharged or gained from the hydrogen or one or more of the buffers.

The invention will be further elucidated with reference to the attached drawings, in which:
Figure 1 shows a schematic of an energy system;
Figure 2 shows a schematic of a cryogenic hydrogen storage system; and
Figure 3 shows schematically a cross section of a cryogenic hydrogen storage system.

Like elements in different figures are referenced using like reference numerals.

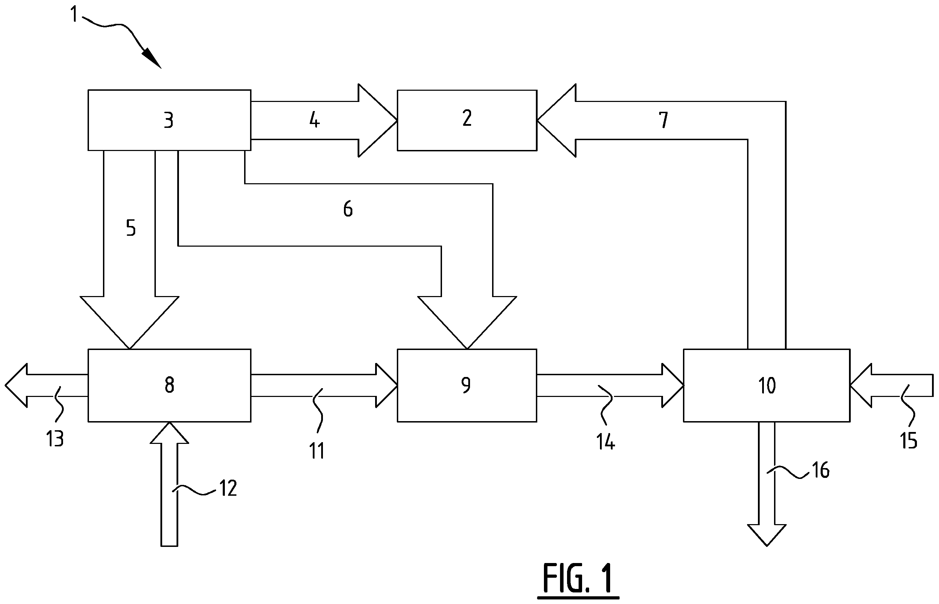

Figure 1 shows an energy system 1, showing schematically energy demanding parties 2. In the scope of figure 1, electric energy will be taken as an example, although the subject matter described herein could be applied to other types of energy, possibly with the use of suitable transducers. In order to provide electrical energy, a renewable energy source 3 is provided. The renewable energy source 3 can be e.g. a solar or wind based power plant, or could be another type of renewable energy source. The renewable energy source 3 is electrically connected to energy demanding parties 2. Accordingly, when energy is available at the renewable energy source 3, the demand can be satisfied by directly providing power 4 to the demanding parties 2. When no or little energy is available at the renewable energy source 3, additional power 7 is needed from elsewhere.

When the available energy at the renewable energy source 3 is higher than the demand, a surplus of energy 5, 6 can be used in an energy storage system including an electrolyser 8, a cryogenic hydrogen storage system 9 and a fuel cell 10. The electrolyser 8 takes in a first portion of surplus energy 5 in order to produce hydrogen 11 from water 12, thereby also creating oxygen 13 which is vented to the air. The hydrogen 11 produced by the electrolyser is gaseous, and at a pressure above 1 bar. The hydrogen 11 is stored in the hydrogen storage system 9, which will be described in more detail below. The cryogenic hydrogen storage system 9 also consumes some, albeit relatively little, of the surplus energy 6. When needed, hydrogen 14 can be extracted from the hydrogen storage system 9, and converted using the fuel cell 10 to provide power 7 for the demanding parties 2. In doing so, the fuel cell takes in oxygen 15 from the environment and produces water 16. It should be noted that as a result, a surplus of energy can be stored temporarily as hydrogen in the cryogenic hydrogen storage system 9, and extracted when desired using the fuel cell 10.

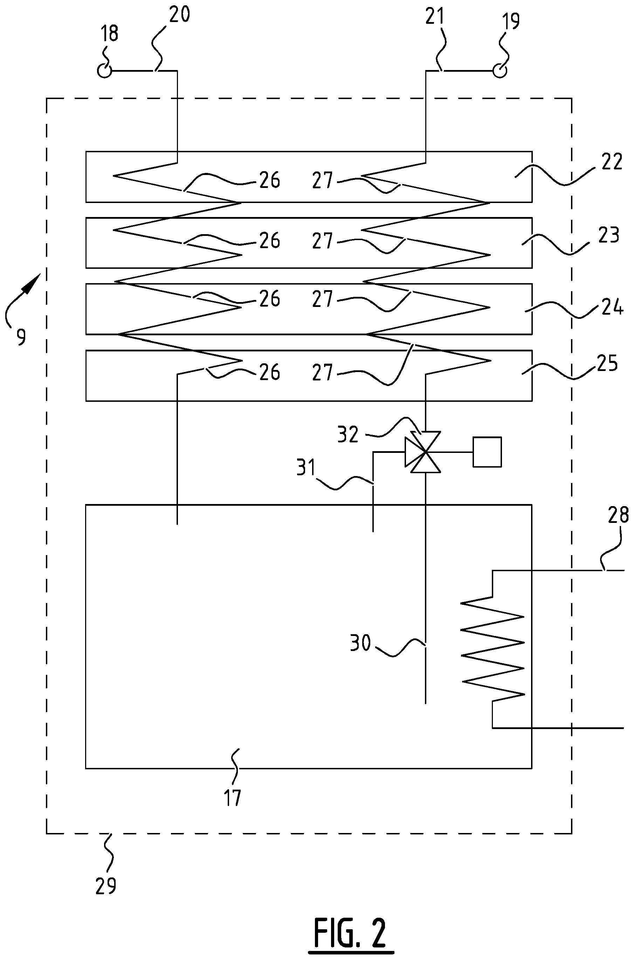

Figure 2 shows some details of a cryogenic hydrogen storage system 9. The cryogenic hydrogen storage system 9 has a vessel 17 which stores gaseous and liquid hydrogen that has been cooled to cryogenic temperatures. In order to insert hydrogen into the system, and to take it out, a separate inlet 18 and outlet 19 are provided respectively. Of course, the in- and outlet 18, 19 could be provided as a single connection point, appropriately called inlet and/or outlet 18, 19 in such a case. The inlet 18 connects to an interior of the vessel 17 via a first conduit 20. The outlet 19 connects to the interior of the vessel 17 via a second conduit 21. The cryogenic hydrogen storage system 9 further comprises several thermal buffers 22 - 25, which are thermally separated from each other. The conduits 20, 21 each pass along the thermal buffers 22 - 25 consecutively. The first conduit 20 starts at the inlet, reaches first the first thermal buffer 22, and travels along the others to reach the last thermal buffer 25 before reaching the vessel 17. The second conduit 21 also runs along all thermal buffers 22 - 25, in the same order as seen from the vessel 17. The flow in the second conduit 21 during use is however from the vessel 17 to the outlet, i.e. opposed to that in the first conduit 20. As such, hydrogen entering the cryogenic hydrogen storage system 9 via the inlet, passes the thermal buffers 22 - 25 in a first order, reaches the vessel 17, and exits the cryogenic hydrogen storage system 9 via the outlet 19 after having passed the same thermal buffers 22 - 25 in a second, reversed order. In order to promote heat exchange between the hydrogen in the conduits 20, 21, the conduits are wound around the thermal buffers 22 - 25 as shown schematically by zigzags 26, 27. Accordingly, heat can transfer relatively easily to the thermal buffers 22 - 25 from the hydrogen in the conduits 20, 21 and vice versa. The buffers 22 - 25 are amongst themselves thermally insulated, meaning they are not in heat exchanging contact. Of course structural components and the conduits 20, 21 themselves allow some heat transfer between the thermal buffers 22 - 25, but these can be kept to a minimum by applying appropriate design principles known to the skilled person. Further, the cryogenic hydrogen storage includes a cooling device 28, which contacts the interior of the vessel 17. The cooling device 28 can be used to compensate for losses, or to cool down the cryogenic hydrogen storage system 9 initially. The thermal buffers 22 - 25, the vessel 17 and a large part of the conduits 20, 21 are arranged within an MLI insulated vacuum container 29. During normal use of the cryogenic hydrogen storage system 9, hydrogen is inserted in the inlet 18. The thermal buffers 22 - 25 are kept at gradually decreasing temperatures. By passing the hydrogen along the thermal buffers 22 - 25 sequentially, the hydrogen cools down. The thermal buffers 22 - 25 take up some heat from the hydrogen. Due to the cooling process, the hydrogen becomes more dense, or even liquid, and carries a relatively large amount of energy in a relatively small space. When energy is needed, hydrogen can be taken out via the outlet 19 after the hydrogen has passed over the thermal buffers 22 - 25 in reverse order, thereby cooling the buffers and heating up. During such a cycle, relatively little energy is lost to cooling and/or compressing the hydrogen, as the required cold is kept in the cryogenic hydrogen storage system 9 even when hydrogen is discharged. As an illustrative example, the second conduit 21 is connected to an bottom part of the vessel 17 via a first conduit section 30 and to an upper part of the vessel 17 via a second conduit section 31. The conduit section 30, 31 connected to the outlet 19 via the second conduit 21 can be selected using a three-way valve 32. Accordingly, liquid can be taken out of the vessel 17 using the first conduit section 30 or gaseous hydrogen can be taken out using the second conduit section 31 selectively. It is noted that in particular the valve 32 is herein shown simplified. In practice a more complex valve, or system of conduits and valves, may be used, in order to make the system suitable for cryogenic temperatures.

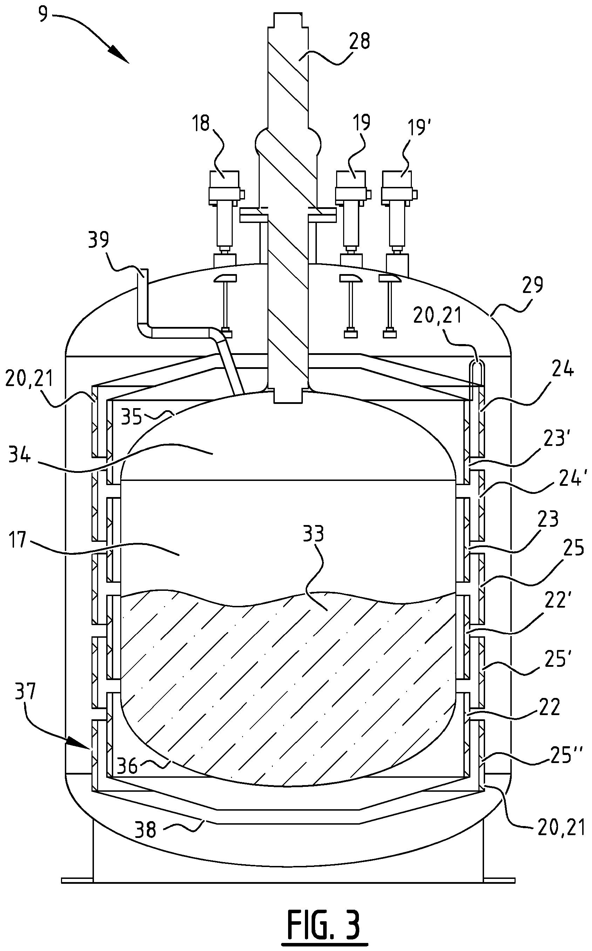

Figure 3 shows more details of a cryogenic hydrogen storage system 9. The cryogenic hydrogen storage system 9 of figure 3 is similar to that of figure 2. Differences and details not visible in figure 2 will be described herein. The vessel 17 is shown to contain both liquid hydrogen 33 and gaseous hydrogen 34. The contents 33, 34 of the vessel 17 can be cooled using the cooling device 28. The vessel 17 has a generally cylindrical shape and a top 35 and a bottom 36. The cylindrical shape defines a longitudinal direction. The thermal buffers 22 - 25, in this example also comprising further thermal buffers 22', 23', 24', 25' and 25", are arranged concentrically with the vessel 17 surrounding it, and surrounding each other. The further thermal buffers 22' - 25" are similar to the other thermal buffers 22 - 25, and serve to show that the amount of thermal buffers 22 - 25 and 22' - 25" used may be suitably chosen. For the sake of brevity, reference will be made to the collection of thermal buffers using reference sings 22 - 25. It should be noted that in practice more thermal buffers 22 - 25 may be employed if desired. The thermal buffers 22 - 25 in this example are annular structures that together substantially enclose the vessel 17. Some of the thermal buffers 22, 22', 23, 23' and 24, 24', 25', 25" respectively, are arranged next to each other, i.e. at the same radial distance from the vessel as each other, but at different heights along the longitudinal direction of the vessel, which in the figure is vertical. A second layer of thermal buffers 24 - 25" is arranged around, and thus partly overlaps, a first layer of thermal buffers 22 - 23'. Starting from the vessel, the conduits 20, 21 run first along the thermal buffers 22 - 23' in the first layer, and then along the thermal buffers 24 - 25" in the second, outer layer. The conduits 20, 21 are shown as a single line wound along the thermal buffers 22 - 25, however, it should be noted that multiple conduits may be used, e.g. a conduit 20, 21 for every inlet 18 and/or outlet 19. The top and bottom thermal buffers 23', 24, 22, 25" also extend over longitudinal ends of the vessel 17. For that purpose, they comprise an annular section 37 and a cover 38, referenced using numerals only for the lowermost thermal buffer 25". Further, the cryogenic hydrogen storage system 9 includes a second outlet 19', which in conjunction with the outlet 19 can be used to selectively let out liquid or gaseous hydrogen, as an alternative to the single, second conduit 21 shown schematically in figure 2. Finally, the cryogenic hydrogen storage system 9 comprises a safety exhaust 39 leading to a safety valve (not shown).

Although the invention has been described with reference to specific examples and embodiments, the invention is not limited thereto. In fact, the scope of the invention is also defined by the claims, which now follow.

## Claims

1. Cryogenic hydrogen storage system (9), comprising:
- a vessel (17) for containing cryogenic hydrogen; and
- at least one inlet and/or outlet (18, 19) for letting gaseous hydrogen into the system (9) and for letting gaseous hydrogen out of the system (9),
further comprising
- a heating and cooling system for heating and cooling gaseous hydrogen,
wherein the heating and cooling system comprises at least one conduit (20, 21) connecting the at least one inlet and/or outlet to the vessel (17), and **characterized by** a plurality of thermally insulated thermal buffers (22 - 25), the thermal buffers (22 - 25) being thermally connected to the at least one conduit (20, 21) in series for heating and cooling a fluid in the conduit (20, 21),
**and in that**
multiple such thermally insulated thermal buffers (22 - 25), are arranged next to each other at an equal or similar distance to the vessel (17).

2. Cryogenic hydrogen storage system (9) according to the previous claim, wherein the vessel (17) is configured for containing liquid hydrogen.

3. Cryogenic hydrogen storage system (9) according to any of the preceding claims, wherein at least some of the thermal buffers (22 - 25) comprise an annular structure arranged around the vessel (17), wherein preferably at least some of the annular structures extend at least partly around each other.

4. Cryogenic hydrogen storage system (9) according to any of the preceding claims, wherein at least some of the thermal buffers (22 - 25) extend at least partially over longitudinal ends of the vessel (17).

5. Cryogenic hydrogen storage system (9) according to any of the preceding claims, wherein at least some of the structures comprise a substantially solid mass of a material suitable for cryogenic temperatures, such as aluminum, titanium, copper, or a combination thereof.

6. Cryogenic hydrogen storage system (9) according to any of the preceding claims, wherein at least some of the buffers (22 - 25) comprise a phase shift material, such as nitrogen or neon.

7. Cryogenic hydrogen storage system (9) according to any of the preceding claims, wherein the at least one conduit (20, 21) is spirally wound along the thermal buffers (22 - 25).

8. Cryogenic hydrogen storage system (9) according to any of the preceding claims, further comprising:
- an inlet (18), connected to the vessel (17) via a first conduit (20); and- an outlet (19), separate from the inlet (18), connected to the vessel (17) via a second conduit (21),
wherein the first and the second conduit (20, 21) are thermally connected to the buffers (22 - 25) in the same sequence as seen from the vessel (17) to the inlet (18) and outlet (19) respectively.

9. Cryogenic hydrogen storage system (9) according to any of the preceding claims, wherein an outlet (19) is selectively connected to an upper zone of the vessel (17) or a bottom zone of the vessel (17), for selectively letting out liquid or gaseous hydrogen.

10. Cryogenic hydrogen storage system (9) according to any of the preceding claims, wherein at least the thermal buffers (22 - 25) are arranged in a vacuum container (29), and/or wherein at least the thermal buffers (22 - 25) are arranged in a common vacuum container (29) and/or wherein the vessel (17) is arranged in the common vacuum container (29).

11. Cryogenic hydrogen storage system (9) according to any of the preceding claims, further comprising a cooling device (27) connected to an interior of the vessel (17) for cooling a contents (33, 34) thereof.

12. Energy storage system (9) comprising an electrolyser (8) for producing hydrogen (11) connected to a cryogenic hydrogen storage system (9) according to any of the preceding claims for supplying hydrogen thereto and/or comprising a hydrogen fuel cell (10) connected to the hydrogen storage system (9).

13. Energy storage system according to the previous claim, wherein the electrolyser (8) is configured to provide hydrogen to the cryogenic hydrogen storage system (9) at a pressure above standard pressure.

14. Method of storing and delivering hydrogen, the method comprising the steps of:
a) receiving gaseous hydrogen at a first, relatively high temperature;
b) cooling the hydrogen; and
c) storing the cooled hydrogen cryogenically,
and for delivering the hydrogen:
d) heating the cooled hydrogen;
e) delivering gaseous hydrogen,
**characterized in that**
cooling the hydrogen is performed by using a series of thermally isolated thermal buffers (22 - 25) of decreasing temperature, thereby compacting the hydrogen and heating the buffers (22 - 25); and
heating the hydrogen is performed by using the series of temperature buffers (22 - 25) in reverse order, thereby heating the cooled hydrogen and cooling the buffers (22 - 25).

15. Method according to the previous claim, wherein step b) comprises liquifying at least part of the hydrogen, step c) comprises storing liquid hydrogen, and step d) comprises gasifying at least part of the liquid hydrogen, preferably wherein during step b) and/or d) an ortho-para conversion is performed at a hydrogen temperature of between 70 K and 90 K, preferably of approximately 80 K.

## Patentansprüche

1. Kryogenes Wasserstoffspeichersystem (9), umfassend:
- ein Gefäß (17) zur Aufnahme von kryogenem Wasserstoff; und
- mindestens einen Einlass und/oder Auslass (18, 19) zum Einlassen von gasförmigem Wasserstoff in das System (9) und zum Ablassen von gasförmigem Wasserstoff aus dem System (9),
ferner umfassend
- ein Heiz- und Kühlsystem zum Erwärmen und Kühlen von gasförmigem Wasserstoff,
wobei das Heiz- und Kühlsystem mindestens eine Leitung (20, 21) umfasst, die den mindestens einen Einlass und/oder Auslass mit dem Gefäß (17) verbindet, und **gekennzeichnet durch** eine Vielzahl von thermisch isolierten Wärmepuffern (22 - 25), wobei die Wärmepuffer (22 - 25) thermisch mit der mindestens einer Leitung (20, 21) in Reihe verbunden sind, um ein Fluid in der Leitung (20, 21) zu erwärmen und abzukühlen,
und **dadurch, dass**
mehrere solcher thermisch isolierter Wärmepuffer (22 - 25) in gleichem oder ähnlichem Abstand zu dem Gefäß (17) nebeneinander angeordnet sind.

2. Kryogenes Wasserstoffspeichersystem (9) nach dem vorstehenden Anspruch, wobei das Gefäß (17) zur Aufnahme von flüssigem Wasserstoff konfiguriert ist.

3. Kryogenes Wasserstoffspeichersystem (9) nach einem der vorstehenden Ansprüche, wobei mindestens einige der Wärmepuffer (22 - 25) eine ringförmige Struktur aufweisen, die um das Gefäß (17) herum angeordnet ist, wobei sich vorzugsweise mindestens einige der ringförmigen Strukturen mindestens teilweise umeinander herum erstrecken.

4. Kryogenes Wasserstoffspeichersystem (9) nach einem der vorstehenden Ansprüche, wobei sich mindestens einige der Wärmepuffer (22 - 25) mindestens teilweise über die Längsenden des Gefäßes (17) erstrecken.

5. Kryogenes Wasserstoffspeichersystem (9) nach einem der vorstehenden Ansprüche, wobei mindestens einige der Strukturen eine im Wesentlichen feste Masse aus einem für kryogene Temperaturen geeigneten Material, wie Aluminium, Titan, Kupfer oder eine Kombination davon, umfassen.

6. Kryogenes Wasserstoffspeichersystem (9) nach einem der vorstehenden Ansprüche, wobei mindestens einige der Puffer (22 - 25) ein Phasenverschiebungsmaterial wie Stickstoff oder Neon umfassen.

7. Kryogenes Wasserstoffspeichersystem (9) nach einem der vorstehenden Ansprüche, wobei die mindestens eine Leitung (20, 21) spiralförmig entlang der Wärmepuffer (22 - 25) gewickelt ist.

8. Kryogenes Wasserstoffspeichersystem (9) nach einem der vorstehenden Ansprüche, ferner umfassend:
- einen Einlass (18), der über eine erste Leitung (20) mit dem Gefäß (17) verbunden ist; und - einen von dem Einlass (18) getrennten Auslass (19), der über eine zweite Leitung (21) mit dem Gefäß (17) verbunden ist,
wobei die erste und die zweite Leitung (20, 21) mit den Puffern (22 - 25) in der gleichen Reihenfolge thermisch verbunden sind, wie sie vom Gefäß (17) aus gesehen zum Einlass (18) bzw. zum Auslass (19) führen.

9. Kryogenes Wasserstoffspeichersystem (9) nach einem der vorstehenden Ansprüche, wobei ein Auslass (19) wahlweise mit einer oberen Zone des Gefäßes (17) oder einer unteren Zone des Gefäßes (17) verbunden ist, um wahlweise flüssigen oder gasförmigen Wasserstoff abzulassen.

10. Kryogenes Wasserstoffspeichersystem (9) nach einem der vorstehenden Ansprüche, wobei mindestens die Wärmepuffer (22 - 25) in einem Vakuumbehälter (29) angeordnet sind, und/oder wobei mindestens die Wärmepuffer (22 - 25) in einem gemeinsamen Vakuumbehälter (29) angeordnet sind und/oder wobei das Gefäß (17) in dem gemeinsamen Vakuumbehälter (29) angeordnet ist.

11. Kryogenes Wasserstoffspeichersystem (9) nach einem der vorstehenden Ansprüche, ferner umfassend eine Kühlvorrichtung (27), die mit dem Inneren des Gefäßes (17) verbunden ist, um dessen Inhalt (33, 34) zu kühlen.

12. Energiespeichersystem (9) umfassend einen Elektrolyseur (8) zur Erzeugung von Wasserstoff (11), der mit einem kryogenen Wasserstoffspeichersystem (9) nach einem der vorstehenden Ansprüche verbunden ist, um dieses mit Wasserstoff zu versorgen, und/oder umfassend eine Wasserstoffbrennstoffzelle (10), die mit dem Wasserstoffspeichersystem (9) verbunden ist.

13. Energiespeichersystem nach dem vorstehenden Anspruch, wobei der Elektrolyseur (8) konfiguriert ist, um dem kryogenen Wasserstoffspeichersystem (9) Wasserstoff mit einem über dem Standarddruck liegenden Druck bereitzustellen.

14. Verfahren zum Speichern und Liefern von Wasserstoff, wobei das Verfahren die folgenden Schritte umfasst:
a) Aufnehmen von gasförmigem Wasserstoff mit einer ersten, relativ hohen Temperatur;
b) Kühlen des Wasserstoffs; und
c) kryogenes Speichern des gekühlten Wasserstoffs,
und zum Liefern des Wasserstoffs:
d) Erwärmen des gekühlten Wasserstoffs;
e) Liefern von gasförmigem Wasserstoff,
**dadurch gekennzeichnet, dass**
das Kühlen des Wasserstoffs unter Verwendung einer Reihe von thermisch isolierten Wärmepuffern (22 - 25) mit abnehmender Temperatur erfolgt, wodurch der Wasserstoff verdichtet und die Puffer (22 - 25) erwärmt werden; und
das Erwärmen des Wasserstoffs unter Verwendung der Reihe von Wärmepuffern (22 - 25) in umgekehrter Reihenfolge erfolgt, wodurch der gekühlte Wasserstoff erwärmt wird und die Puffer (22 - 25) gekühlt werden.

15. Verfahren nach dem vorstehenden Anspruch, wobei Schritt b) das Verflüssigen von mindestens einem Teil des Wasserstoffs umfasst, Schritt c) das Speichem von flüssigem Wasserstoff umfasst und Schritt d) das Vergasen von mindestens einem Teil des flüssigen Wasserstoffs umfasst, vorzugsweise wobei während Schritt b) und/oder d) eine ortho-para-Umwandlung bei einer Wasserstofftemperatur zwischen 70 K und 90 K, vorzugsweise von etwa 80 K, durchgeführt wird.

## Revendications

1. Système (9) de stockage d'hydrogène cryogénique, comprenant:
- un récipient (17) destiné à contenir de l'hydrogène cryogénique; et
- au moins une entrée et/ou sortie (18, 19) destinée à faire entrer de l'hydrogène gazeux dans le système (9) et à faire sortir de l'hydrogène gazeux du système (9),
comprenant en outre
- un système de chauffage et de refroidissement destiné à chauffer et refroidir de l'hydrogène gazeux,
dans lequel le système de chauffage et de refroidissement comprend au moins une conduite (20, 21) reliant l'au moins une entrée et/ou sortie au récipient (17), et **caractérisé par** une pluralité de tampons (22 - 25) thermiques isolés thermiquement, les tampons (22 - 25) thermiques étant reliés thermiquement à l'au moins une conduite (20, 21) en série afin de chauffer et de refroidir un fluide dans la conduite (20, 21),
**et en ce que**
de multiples tels tampons (22 - 25) thermiques isolés thermiquement sont disposés les uns à côté des autres à une distance égale ou similaire du récipient (17).

2. Système (9) de stockage d'hydrogène cryogénique selon la revendication précédente, dans lequel le récipient (17) est conçu pour contenir de l'hydrogène liquide.

3. Système (9) de stockage d'hydrogène cryogénique selon l'une quelconque des revendications précédentes, dans lequel au moins certains des tampons (22 - 25) thermiques comprennent une structure annulaire disposée autour du récipient (17), dans lequel, de préférence, au moins certaines des structures annulaires s'étendent au moins partiellement les unes autour des autres.

4. Système (9) de stockage d'hydrogène cryogénique selon l'une quelconque des revendications précédentes, dans lequel au moins certains des tampons (22 - 25) thermiques s'étendent au moins partiellement sur des extrémités longitudinales du récipient (17).

5. Système (9) de stockage d'hydrogène cryogénique selon l'une quelconque des revendications précédentes, dans lequel au moins certaines des structures comprennent une masse sensiblement solide d'un matériau approprié pour des températures cryogéniques, tel que l'aluminium, le titane, le cuivre, ou une combinaison de ceux-ci.

6. Système (9) de stockage d'hydrogène cryogénique selon l'une quelconque des revendications précédentes, dans lequel au moins certains des tampons (22 - 25) comprennent un matériau de déphasage, tel que l'azote ou le néon.

7. Système (9) de stockage d'hydrogène cryogénique selon l'une quelconque des revendications précédentes, dans lequel la au moins une conduite (20, 21) est enroulée en spirale le long des tampons (22 - 25) thermiques.

8. Système (9) de stockage d'hydrogène cryogénique selon l'une quelconque des revendications précédentes, comprenant en outre:
- une entrée (18), reliée au récipient (17) par l'intermédiaire d'une première conduite (20) ; et- une sortie (19), séparée de l'entrée (18), reliée au récipient (17) par l'intermédiaire d'une seconde conduite (21),
dans lequel la première et la seconde conduite (20, 21) sont reliées thermiquement aux tampons (22 - 25) dans le même ordre tel que vu depuis le récipient (17) vers l'entrée (18) et la sortie (19) respectivement.

9. Système (9) de stockage d'hydrogène cryogénique selon l'une quelconque des revendications précédentes, dans lequel une sortie (19) est sélectivement reliée à une zone supérieure du récipient (17) ou à une zone inférieure du récipient (17), afin de faire sortir sélectivement de l'hydrogène liquide ou gazeux.

10. Système (9) de stockage d'hydrogène cryogénique selon l'une quelconque des revendications précédentes, dans lequel au moins les tampons (22 - 25) thermiques sont disposés dans un réservoir sous vide (29), et/ou dans lequel au moins les tampons (22 - 25) thermiques sont disposés dans un réservoir sous vide (29) commun et/ou dans lequel le récipient (17) est disposé dans le réservoir sous vide (29) commun.

11. Système (9) de stockage d'hydrogène cryogénique selon l'une quelconque des revendications précédentes, comprenant en outre un dispositif de refroidissement (27) relié à un intérieur du récipient (17) destiné à refroidir un contenu (33, 34) de celui-ci.

12. Système (9) de stockage d'énergie comprenant un électrolyseur (8) destiné à produire de l'hydrogène (11) relié à un système (9) de stockage d'hydrogène cryogénique selon l'une quelconque des revendications précédentes pour fournir de l'hydrogène à celui-ci et/ou comprenant une pile à hydrogène (10) reliée au système (9) de stockage d'hydrogène.

13. Système de stockage d'énergie selon la revendication précédente, dans lequel l'électrolyseur (8) est conçu pour fournir de l'hydrogène au système (9) de stockage d'hydrogène cryogénique à une pression supérieure à la pression standard.

14. Procédé de stockage et de distribution de l'hydrogène, le procédé comprenant les étapes consistant à:
a) recevoir de l'hydrogène gazeux à une première température relativement élevée;
b) refroidir l'hydrogène; et
c) stocker cryogéniquement l'hydrogène refroidi,
et pour distribuer l'hydrogène:
d) chauffer l'hydrogène refroidi;
e) distribuer de l'hydrogène gazeux,
**caractérisé en ce que**
le refroidissement de l'hydrogène est effectué à l'aide d'une série de tampons (22 - 25) thermiques isolés thermiquement de température décroissante, compactant ainsi l'hydrogène et chauffant les tampons (22 - 25); et
le chauffage de l'hydrogène est effectué à l'aide de la série de tampons (22 - 25) de température dans l'ordre inverse, chauffant ainsi l'hydrogène refroidi et refroidissant les tampons (22 - 25).

15. Procédé selon la revendication précédente, dans lequel l'étape b) comprend la liquéfaction d'au moins une partie de l'hydrogène, l'étape c) comprend le stockage de l'hydrogène liquide, et l'étape d) comprend la gazéification d'au moins une partie de l'hydrogène liquide, de préférence, dans lequel, au cours de l'étape b) et/ou d), une transformation ortho-para est effectuée à une température de l'hydrogène comprise entre 70 K et 90 K, de préférence d'environ 80 K.
